## Europäisches Patentamt
## European Patent Office
## Office européen des brevets

(19)

(11) Veröffentlichungsnummer: **0 077 972**
**B1**

(12) # EUROPÄISCHE PATENTSCHRIFT

(45) Veröffentlichungstag der Patentschrift:
23.07.86

(51) Int. Cl.⁴: **G 03 B 17/30**

(21) Anmeldenummer: **82109405.9**

(22) Anmeldetag: **12.10.82**

(54) Haken-Klemmspule.

(30) Priorität: **24.10.81 DE 3142240**

(43) Veröffentlichungstag der Anmeldung:
**04.05.83 Patentblatt 83/18**

(45) Bekanntmachung des Hinweises auf die Patenterteilung:
**23.07.86 Patentblatt 86/30**

(84) Benannte Vertragsstaaten:
**CH DE FR GB IT LI**

(56) Entgegenhaltungen:
**EP-A-0 065 250**
**CH-A-623 015**
**DE-B-1 267 537**
**US-A-3 361 380**

(73) Patentinhaber: **AGFA- GEVAERT Aktiengesellschaft,**
**D-5090 Leverkusen 1 (DE)**

(72) Erfinder: **Lührig, Hermann, Dipl.- Ing., Heinrich-von- Kleist- Strasse 12, D-5090 Leverkusen 1 (DE)**
Erfinder: **Kovacic, Guido, Schulstrasse 7, D-5463 Unkel (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine Haken-Klemmspule zur Befestigung eines gelochten Filmendes in dem Schlitz eines Spulenkernes einer Filmspule.

Es ist eine große Zahl von Spulenausführungen bekannt, die zum Aufwickeln verschiedenartiger Bandmaterialien dienen. Bei diesen Spulen ist das Befestigen des Bandes an den Spulen zum Aufwickeln auf die verschiedenste Art gelöst, wie z.B. durch Umschlingen, Ankleben, Nieten, Klemmen oder Einhaken am oder in einem Schlitz im Spulenkern. Gegenstand der Erfindung sind Spulen, in die das gelochte Filmbandende eingehakt wird.

Für Kleinbildfilme sind aus der DE-C-1 272 707 Spulen bekannt, die z.B. als Doppelhakenspulen bezeichnet werden. Diese Spulen besitzen im Spulenkern einen Schlitz, in dem eingeformte Haken und separate Leitflächen angebracht sind. Das mit einem Loch versehene Filmende wird in diesen Schlitz eingeschoben, wobei die Leitflächen zu beiden Seiten der Haken den Film um den Haken solange wölben, bis das Loch im Film in den Haken einschnappt. Die Leitflächen verhindern nach dem Einschnappen des Loches in den Haken aufgrund der Filmsteifigkeit ein selbsttätiges Aushaken des Filmbandes aus der Spule.

Diese bekannte Spulenform hat den Nachteil, daß sich nur relativ geringe Zugkräfte auf die Filmbandmaterialien übertragen lassen, was häufig zur Folge hat, daß der Film aus der Spule ausreißt und damit unbrauchbar wird oder zumindest nicht mehr in die lichtsichere Patrone zurückgespult werden kann. Die weitverbreiteten Winderkameras, das sind Kameras mit Motortransport, die den Film mit hoher Geschwindigkeit und großem Drehmoment in der Kamera fördern, verursachen häufig ein Ausreißen des Filmes aus der Verhakung in der Spule.

Die US-Patentschrift 3 361 380 beschreibt eine Kombination Spule-Filmband, bei welcher in einem Spulenschlitz 2 Haken und im Filmband 2 Löcher zur Erhöhung der Haltekraft angebracht werden. Auch diese Spule eignet sich nur bedingt zum sicheren Befestigen des Filmes an der Spule und erhöht nur in geringem Maße die Filmhaltekraft.

Vor der Benutzung von Haltezapfen oder Haltehaken wurden häufig feststehende oder bewegliche Klemmvorrichtungen zum Einklemmen des Filmendes im Schlitz der Filmspule verwendet. Diese Art von Vorrichtungen, vor allen Dingen diejenigen, die sich federnder beweglicher Pendel bedienten, zeigten jedoch den Nachteil, daß die Herstellung verhältnismäßig umständlich und daher teuer war.

Zudem bestand keine Sicherheit gegen Herausrutschen des Filmes aus dem Spulenkern, da sich die Klemmvorrichtung durch Erschütterungen oder Fallen der Spule lösen konnte und das Filmende dann frei aus der Spule rutschte.

Dies war insbesondere bei glatten Filmoberflächen der Fall, bei denen das Pendel auf der Oberfläche rutschte und diese nicht klemmend fassen konnte. Das Einfädeln eines Filmendes gegen das mit Federkraft angedrückte Pendel bereitete zudem Schwierigkeiten und eignete sich nicht für eine mechanische Fertigung.

Aus der Schweizerischen Patentschrift CH-A-623015 ist eine Spule mit einem federnden Hebel bekannt, wobei der Hebel sich innerhalb des Umfanges der Spule erstreckt.

Der Hebel weist einen Haken auf, in den die Perforation eines Kinofilmes eingehängt wird. Bei einem am Ende des Wickelvorganges auftretenden Filmzug wird der Haken federnd an einen eine Klemmfläche aufweisenden Teil der Filmspule herangezogen und der Film so zwischen Haken und der Klemmfläche festgeklemmt, um ein Aufreißen der Perforation zu verhindern. Die Spule ist für perforierten Kinofilm oder Schmalfilm vorgesehen, um ein Lösen des Filmes von der Spule am Ende des Abwickelvorganges zu erschweren.

Für Kleinbildfilme eignet sich diese Spule nicht, da Kleinbildfilme wegen der genormten Spulen- und Kernmaße eine derartige Haken-Klemmspule nicht zulassen. Die Kleinbildfilmspule ist mit Bohrungen zur Aufnahme kameraseitiger Schlüssel versehen, die sich axial bis fast zum Spulenschlitz erstrecken, sodaß am Filmrand kein Raum zur Anbringung von Haken oder Klemmeinrichtung zur Aufnahme der Perforationslöcher zur Verfügung steht.

In der EP-A-0 065 250 ist eine Filmspule mit Haltezapfen zur Befestigung eines gelochten Filmendes in dem Schlitz einer Kleinbildfilmspule beschrieben, bei der die Methode der Haltezapfenspule nach der oben erwähnten DE-C-1 272 707 mit der Methode der Klemm- oder Pendelspule mit federnd beweglichen pendeln kombiniert ist. Diese Haken-Klemmspule zeichnet sich durch eine sehr gute Befestigung des Filmendes in dem Schlitz der Spule durch das durch Zug aktivierte Klemmen der Klemmplatte aus. Die Haltekraft beträgt bei dieser Ausführung bis zum Doppelten der Haltekraft, die eine nur mit Haltezapfen versehene Spule erreicht.

Nachteilig ist jedoch die Herstellung der Halte-Klemmeinrichtung der Spule in einem Spritzgießwerkzeug, da ein kompliziertes und somit teures Werkzeug benötigt wird, welches nicht geradlinig getrennt ist und somit schlecht nachzuarbeiten ist. An den Klemmkanten der Klemmplatten können leicht Grate entstehen, die den Film beschädigen und somit die Filmhaltekraft mindern können. Um bei hohem Zug ein Durchschnappen der an Gelenken oder Torsionsstäben befestigten Klemmplatten zu vermeiden, müssen die Fertigungstoleranzen sehr genau eingehalten werden.

Der Erfindung liegt daher die Aufgabe zugrunde, eine Befestigungseinrichtung der eingangs genannten Art zu schaffen, mit der es auf einfache Weise möglich ist, ein gelochtes Filmende gegen Ausfädeln gesichert in einer Kleinbildfilmspule so zu befestigen, daß die Befestigung einer großen Zugkraft wiedersteht, das Filmende leicht einfädelbar ist und die Spule mit der Befestigungseinrichtung einfach und fehlerfrei herstellbar ist.

Ausgehend von Befestigungsvorrichten der einleitend genannten Art ist die Aufgabe erfindungsgemäß dadurch gelöst, daß in dem Schlitz der Filmspule mindestens ein Haken auf einem um eine Drehachse schwenkbaren Klemmkörper vor einer Klemmfläche des Klemmkörpers angeordnet ist und außerhalb des Hakenbereiches der Klemmfläche gegenüber an einem weiteren Klemmkörper eine Klemmfläche vorgesehen ist, gegen die die Klemmfläche des schwenkbaren Klemmkörpers schwenkbar ist, wenn der Haken auf Zug belastet ist, wodurch das in den Haken eingehakte Filmende außerhalb des Hakenbereiches einklemmbar ist.

Hierdurch wird in überraschend einfacher Weise eine hohe Haltekraft durch den Klemmkörper bewirkt, der bei Zugbeanspruchung von dem in ein Loch im Filmende eingreifenden Haken bewegt und in eine Stellung geschwenkt wird, in der er den nichtgelochten Teil des Filmendes gegen eine Klemmfläche drückt und zwischen sich und der Klemmfläche des Spulenschlitzes einklemmt.

Zur Befestigung des gelochten Filmendes in dem Schlitz der Filmspule wird dieses gegen die trichterförmigen Flächen an der Spulenschlitzöffnung geschoben und rutscht, sich wellig verformend, über den Haltezapfen weg und unter den Leit- bzw. Klemmflächen durch. Gelangt das Langloch im Filmstreifenende über den Haltezapfen, so springt dieser in das Loch ein und der Film nimmt seine ursprüngliche plane Form wieder an. Ein Aushaken kann nicht mehr erfolgen. Wird ein Zug entgegen der Einfädelrichtung auf den Filmstreifen ausgeübt, so legt sich das Langloch gegen den Haken und schwenkt hierbei den Klemmkörper in Zugrichtung, wodurch die hinter dem Haken auf dem Klemmkörper angebrachte Klemmfläche gegen die feststehenden Klemmflächen im Spulenschlitz gedrückt und das Filmstreifenende zusätzlich zur Lochbefestigung noch eingeklemmt wird.

Für die Haltekraft ist somit nicht mehr die Ausreißfestigkeit des Loches im Filmende allein maßgebend, sondern zusätzlich die Reißfestigkeit des Filmendes.

Eine spezielle Ausführungsform der Befestigungseinrichtung zeichnet sich dadurch aus, daß zwei Haken auf dem gelenkig gelagerten und um eine Drehachse schwenkbaren Klemmkörper nebeneinander vor einer Klemmfläche angeordnet sind, so daß drei Bereiche entstehen, in denen der nicht gelochte Teil des Filmstreifenendes zwischen der Klemmfläche des schwenkbaren Klemmkörpers und der gegenüber angeordneten feststehende Klemmfläche des weiteren Klemmkörpers im Spulenschlitz einklemmbar ist.

Hierbei wird die Klemmkraft durch zwei Haken, die in zwei Lochungen des Filmendes eingreifen, erhöht. Durch die zwei Haken wird der Filmstreifen in Wickelrichtung zentriert und kann nach dem Einfädeln nicht schräg auf die Spule auflaufen oder von der Spule gezogen werden. Die Klemmfläche des Klemmkörpers wird bei Zugeinwirkung an drei Stellen gegen die feststehende Klemmfläche geschwenkt und klemmt das Filmende zusätzlich ein. Es sind natürlich auch mehr als zwei Haken mit einer entsprechenden Anzahl von Lochungen im Filmstreifen verwendbar, jedoch verringert sich mit der Anzahl Lochungen die klemmbare Fläche. Bei einer Vielzahl von Haken und Lochungen müssen diese sehr schmal gehalten werden, wodurch die Kerbwirkung, die die Haken auf das Filmmaterial am Rande der Lochungen ausüben, steigt und damit die Gefahr des Einreißens erhöht wird.

Eine weitere sehr vorteilhafte Ausführungsform einer Haken-Klemmspule zeichnet sich dadurch aus, daß in dem Schlitz der Filmspule zwei Haken nebeneinander vorgesehen sind, wobei der eine Haken auf einem unteren schwenkbaren Klemmkörper und der zweite Haken auf einem oberen schwenkbaren Klemmkörper angeordnet ist, die Haken vor den Klemmflächen befestigt sind und die Klemmkörper so ausgebildet sind, daß sich in den hakenfreien Bereichen die Klemmflächen gegenüberstehen und gegeneinander schwenken, wenn die Haken auf Zug belastet werden, so daß das in die Haken eingehakte Filmende außerhalb des Hakenbereiches eingeklemmt wird.

Durch die Anordnung von zwei schwenkbaren Klemmkörpern wird erreicht, daß die Klemmflächen unter Zugeinwirkung schon nach einem kurzen Filmweg aneinandergebracht werden. Das Filmende wird dabei mittig im Spulenschlitz eingeklemmt.

Das Filmende kann bei dieser Ausführungsform mit nur einem Loch versehen sein, wobei die beiden gegenüberstehenden nur teilweise ausgeformten Haken dem einen Loch so angepaßt sind, daß die auf das Loch ausgeübten Kerbkräfte klein bleiben.

Die beiden nur teilweise ausgeformten Haken haben hierzu die Form eines Hakens, aus dem in der Mitte ein Streifen herausgeschnitten ist. Es können aber auch zwei Haken angeordnet werden, von denen jeder in ein angepaßtes Loch eingreift. Auch bei dieser Ausführungsform können, wie oben bereits beschrieben, mehr als zwei Haken, zum Beispiel drei oder vier Haken, angeordnet werden.

Läßt sich das Filmende bei diesen Spulenausführungen nur von einer Seite her in die Spule einfädeln, so muß die Spule im ungünstigsten Fall um fast 360° gedreht werden, um in die Einfädelstellung zu gelangen.

Eine weitere spezielle Ausführungsform zeichnet sich daher dadurch aus, daß in dem Schlitz der Filmspule mindestens zwei Haken übereinander auf einem schwenkbaren und in der Schlitzmitte angeordneten Klemmkörper vorgesehen sind, die Einfädelrichtungen der Haken um 180° versetzt sind und oberhalb und unterhalb des schwenkbaren Klemmkörpers in dem hakenfreien Bereich feststehende Klemmflächen angeordnet sind, gegen die der Klemmkörper schwenkbar ist, so daß der nicht gelochte Teil des Filmstreifenendes zwischen den Klemmflächen des schwenkbaren Klemmkörpers und den feststehenden Klemmflächen einklemmbar ist.

Diese Ausführungsform hat den Vorteil, daß das Filmende von beiden Seiten in den Spulenschlitz einführbar ist und die Spule im ungünstigsten Falle nur um knapp 180° gedreht werden muß, um in eine Einfädelstellung zu gelangen. Wegen des kleineren Hebelarmes des Klemmkörpers ist die zum Aktivieren der Klemmkraft erforderliche Zugkraft größer, so daß es bei dieser Ausführung von Vorteil sein kann, wenn der schwenkbare Klemmkörper auf jeder seiner Längsseiten mehrere Haltezapfen besitzt, die in die Lochungen im Filmende eingreifen.

Eine weitere Erhöhung der Klemmkraft kann dadurch erreicht werden, daß mindestens eine der gegenüberliegenden Klemmflächen aufgerauht oder mit gegen die Zugrichtung des Filmes gerichteten Zähnen versehen ist.

Um ein Filmende durch das Kassettenmaul einer geschlossenen Filmkassette in die Spule einfädeln zu können, ist es erforderlich, daß die Filmspule zur Anzeige der Einfädelstellung an einem außerhalb der Kassette liegenden Teil mit mindestens einem Kennzeichen versehen ist.

Die Spule mit der beschriebenen Befestigungseinrichtung kann sehr wirtschaftlich aus Kunststoff als ein Spritzteil hergestellt werden, wobei die Klemmkörper mit ihrer Befestigung im Schlitz mit der Spule zusammen gespritzt werden.

Die Funktion der Befestigungseinrichtung ist sicher, so daß die Spule mehrfach verwendet werden kann, ohne daß irgendwelche Störungen auftreten. Diese Sicherheit der Befestigungseinrichtung wird dadurch erreicht, daß die Klemmkraft zum Verklemmen des Filmendes in dem Spulenschlitz erst durch Zug am Film erzeugt wird und mit anwachsender Zugkraft etwa proportional ansteigt. Dieser Vorgang ist beliebig oft wiederholbar. Auch wenn die Klemmkraft nachgelassen hat, wird sie bei erneutem Zug wieder erzeugt.

Vorzugsweise kann die Spule mit einem geradlinig geteilten Spritzgießwerkzeug hergestellt werden.

Im folgenden werden Ausführungsformen der Erfindung näher beschrieben. Es zeigt:

Fig. 1 eine Kleinbild-Filmspule mit einem Haken auf einem schwenkbaren Klemmkörper,

Fig. 2 eine vergrößerte Ansicht des Spulenschlitzes der Spule nach Fig. 1,

Fig. 3 eine Draufsicht auf den Haken der Spule nach Fig. 1,

Fig. 4 einen Schnitt durch den Spulenschlitz der Spule längs AA in Fig 1,

Fig. 5 den Schnitt nach Fig. 4 bei Einwirkung einer Zugkraft,

Fig. 6 einen Spulenschlitz auf einem schwenkbaren Klemmkörper,

Fig. 7 eine Draufsicht auf die beiden Haken des Klemmkörpers nach Fig. 6,

Fig. 8 einen Spulenschlitz mti zwei Haken auf gegenüberliegenden und schwenkbaren Klemmkörpern,

Fig. 9 eine Draufsicht auf den unteren Haken und den oberen eigentlich nicht sichtbaren Haken (daher gestrichelt dargestellt),

Fig. 10 einen Schnitt durch den Schlitz nach Fig. 8 längs der Linie BB,

Fig. 11 den gleichen Schnitt bei Zugbelastung (Pfeile),

Fig. 12 eine Kleinbildspule zum beidseitigen Einfädeln des Filmes mit mittigem Klemmkörper und gegenüberstehenden, um 180° versetzten Haken und

Fig. 13 einen Schnitt durch den Spulenschlitz längs der Linie CC in Fig. 12.

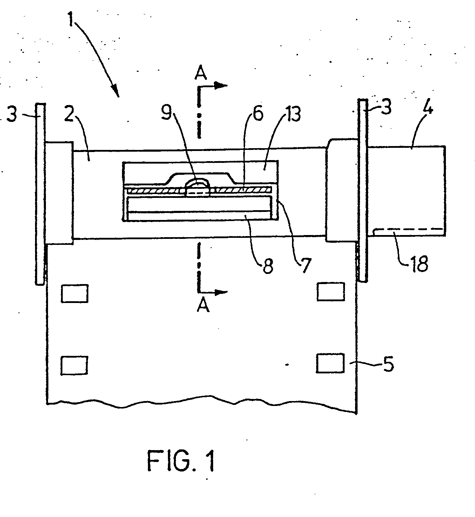

In Fig. 1 ist eine Kleinbildfilmspule 1 dargestellt, die in üblicher Weise aus einem Spulenkern 2 mit zwei Flanschen 3 besteht und auf der einen Seite einen Spulenkopf 4 besitzt, der bei einem fertig konfektionierten Film aus der Patrone herausragt. Auf die Spule 1 wird ein Filmstreifen 5 aufgewickelt, der mit seinem Ende 6 an der Spule befestigt wird, um den Filmstreifen 5 nach der Belichtung in einer Kamera wieder auf die Spule in der lichtsicheren Patrone zurückwickeln zu können.

In dem Schlitz 7 des Spulenkerns ist auf einem schwenkbaren Klemmkörper 8 ein Haken 9 angeordnet, in den das gelochte Filmende 6 eingehakt ist. Dem Klemmkörper 8 gegenüber ist ein feststehender Klemmkörper 13 vorgesehen.

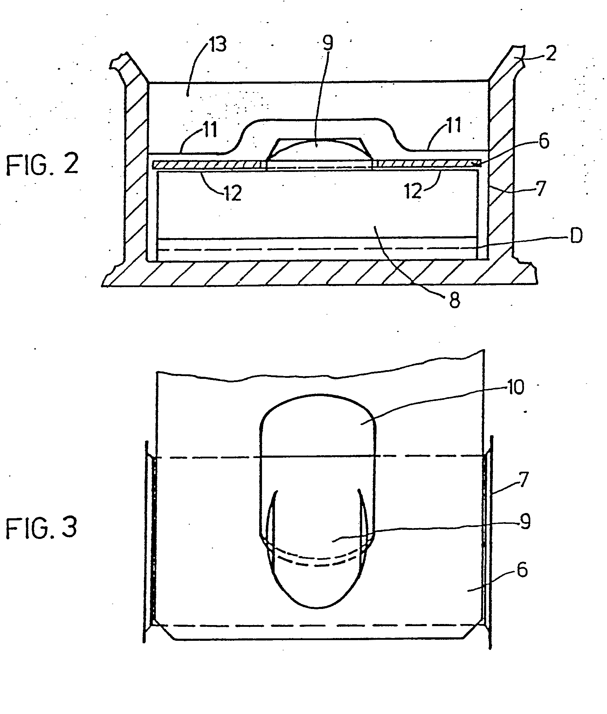

Der Schlitz 7 im Spulenkern 2 ist in Fig. 2 vergrößert dargestellt. Der untere Klemmkörper 8 ist um eine Drehachse D schwenkbar gelagert und trägt oben in der Mitte den Haken 9 zum Einhaken des mit einem Langloch 10 (Fig. 3) versehenen Filmendes 6.

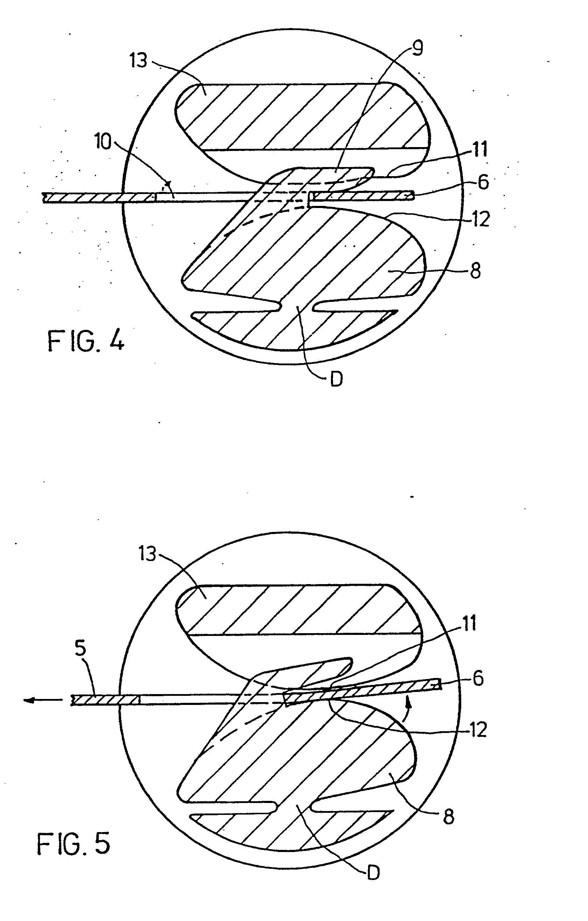

Beim Einschieben des Filmendes 6 wölbt sich das Filmende 6 über den Haken 9 und unter die Klemmflächen 11. Sobald das Langloch 10 über dem Haken 9 angelangt ist, springt das Langloch 10 in den Haken 9. Es legt sich das Filmende 6 wieder plan und läßt sich nicht wieder aushaken (Fig. 2). Die Klemmflächen 11 am oberen feststehenden Klemmkörper 13 dienen hierbei als Niederhalter für das eingehakte Filmende 6. Fig. 4 zeigt einen Schnitt durch den Schlitz 7 der Filmspule 1 nach Fig. 1 längs der Linie AA, mit einem eingehakten Filmende 6.

Das Filmende 6 ist eingehakt, aber noch nicht mit Zug belastet. Der Querschnitt zeigt den unteren, um die Drehachse D drehbar gelagerten Klemmkörper 8 mit dem Haken 9 und der Klemmfläche 12. Oberhalb des Klemmkörpers 8 ist der feststehende Klemmkörper 13 angeordnet, der einerseits als Niederhalter für das Filmende 6 dient, andererseits die Klemmfläche 11 aufweist, die beidseitig im hakenfreien Bereich des Spulenschlitzes 7 angeordnet ist.

Wird, wie in Fig. 5 gezeigt, das Filmband 5 auf Zug belastet (Pfeil), so schwenkt der untere Klemmkörper 8 um die Drehachse D in Richtung Filmzug, wobei die bewegliche Klemmfläche 12 gegen die feststehende Klemmfläche 11 gedreht wird (Pfeil bei 12) und das Filmende 6 zwischen den Klemmflächen 11, 12 eingeklemmt wird. Die Klemmflächen 11, 12 können zur Erhöhung der Reibung aufgerauht oder aber mit Zähnen versehen sein (nicht dargestellt).

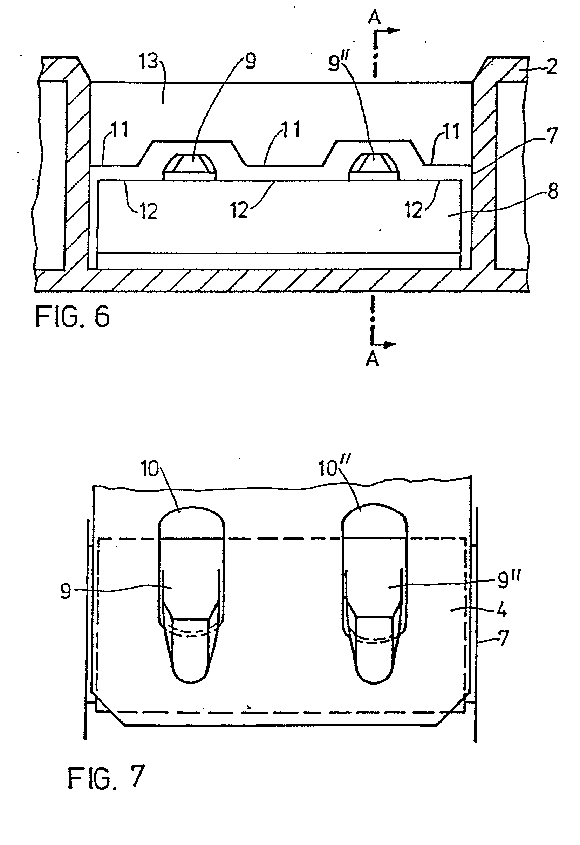

In Fig. 6 ist ein Spulenschlitz 7 dargestellt, in dem auf einem unteren Klemmkörper 8 zwei Haken 9, 9″ angeordnet sind. In den hakenfreien Bereichen sind drei Abschnitte von sich gegenüberliegenden Klemmflächen 11, 12 vorhanden.

Das Einfädeln erfolgt in gleicher Weise wie bei der ersten Ausführungsart, nur daß das Filmende 4 mit zwei Langlöchern 10, 10″ für die beiden Haken 9, 9″ ausgestattet ist (Fig. 7). Die Haken 9, 9″ und die Langlöcher 10, 10″ werden bei dieser Ausführung schmaler ausgeführt, um ausreichende Klemmflächen 11, 12 zu erhalten. Ein Schnittbild durch den Haken 9″ entlang der Linie AA entspricht im Aussehen und in der Funktion den Schnittbildern nach Fig. 4 und Fig. 5 mit kleineren Haken 9, 9″ und ist daher nicht dargestellt. Die Zweihakenspule nach Fig. 6 hat den Vorteil, daß die zwei Haken eine etwas größere Zugkraft aufnehmen können, bevor die Langlöcher 10, 10′, ausreißen, und durch die größere Zugkraft auch eine größere Klemmkraft ermöglicht wird, so daß sich der Effekt der Haltefestigkeit eines Filmendes 4 in dem Spulenschlitz 7 weiter verbessert.

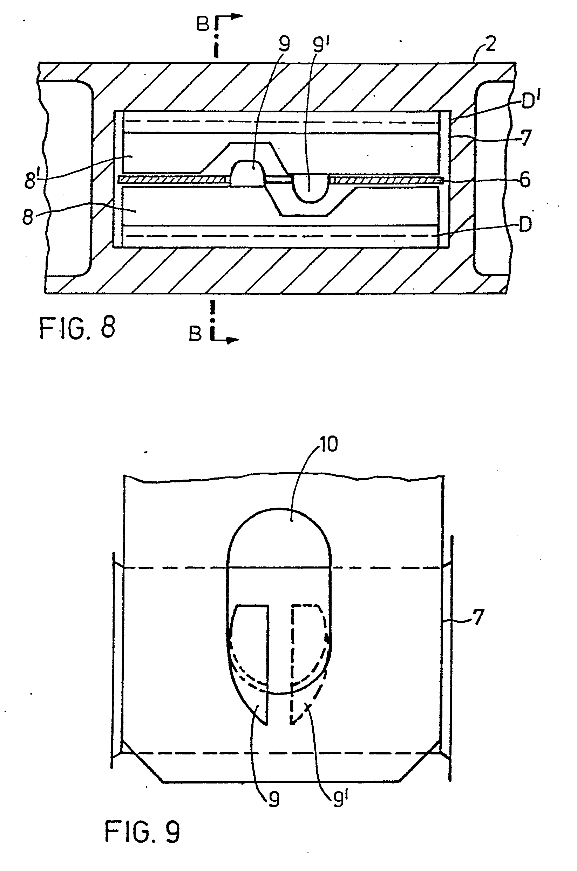

Eine vorteilhafte, weil sehr schnelle Klemmung des Filmendes 6 zeigt eine Befestigungseinrichtung nach Fig. 8 bis 11.

In dem Spulenschlitz 7 sind zwei nur teilweise ausgeformte Haken 9, 9′ auf gegenüberliegenden schwenkbaren Klemmkörpern 8, 8′ angeordnet (Fig. 8). Das Filmende 6 schiebt sich beim Einfädeln sowohl über den unteren Haken 9 als auch unter dem oberen nach unten stehenden Haken 9′ hinweg. Erreicht das Langloch 10 beide Spitzen der Haken 9, 9′, legt sich das Filmende 6 plan und ist in beiden Haken 9, 9′ eingehakt. Fig. 9 zeigt ein Langloch 10, das eingehakt ist, wobei der rechte Haken 9′ gestrichelt gezeichnet wurde, da nur Haken 9 in Draufsicht zu sehen ist. Die beiden Haken 9, 9′ haben die Form eines großen Hakens 9 und legen sich gleichmäßig an das Langloch 10 an, wobei zum Einfädeln des Filmstreifenendes 6 in den Spulenschlitz die Mitte des Hakens 9 fehlt. Natürlich können auch zwei separate Haken verwendet werden, wobei das Filmende für jeden Haken ein Langloch entsprechender Form besitzt.

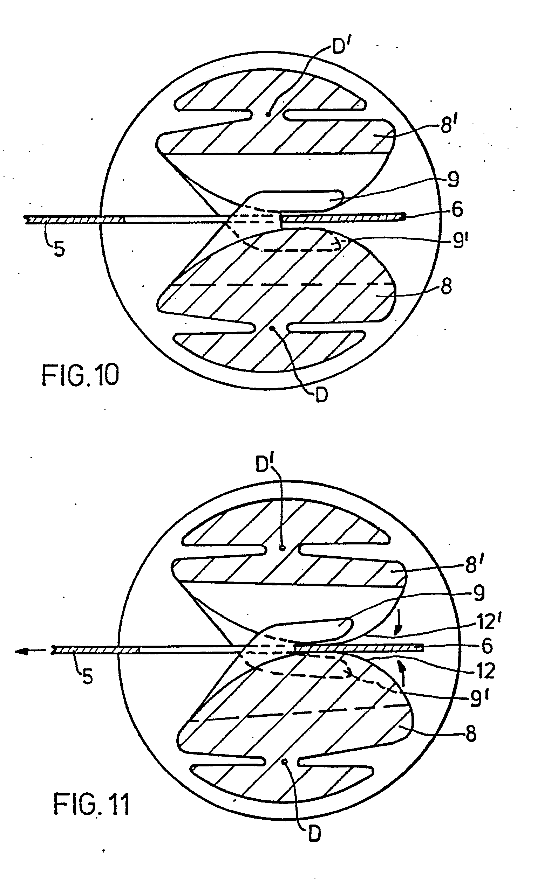

Die Fig. 10 und Fig 11 zeigen die Funktion dieser Befestigungseinrichtung (Schnittbilder längs der Linie BB in Fig. 8).

In Fig. 10 ist ein im oberen und unteren Haken 9, 9′ eingehaktes Filmende 6 gezeigt. Auf das Filmende 6 wird kein Zug ausgeübt, und der obere und untere Klemmkörper 8′ bzw. 8 stehen in Ruhestellung. Wird nun, wie in Fig. 11 gezeigt, ein Zug auf den Film 5 (Pfeil) ausgeübt, so werden beide Haken 9, 9′ in Zugrichtung gezogen und schwenken ihre Klemmkörper 8, 8′ um deren Drehachsen D, D′, so daß sich die beiden beweglichen Klemmflächen 12, 12′ von beiden Seiten nähern und das Filmende zwischen sich klemmen (Pfeile). Auf diese Art und Weise wird ein sehr schnelles Klemmen erreicht und hierzu nur ein sehr kurzer Zugweg benötigt.

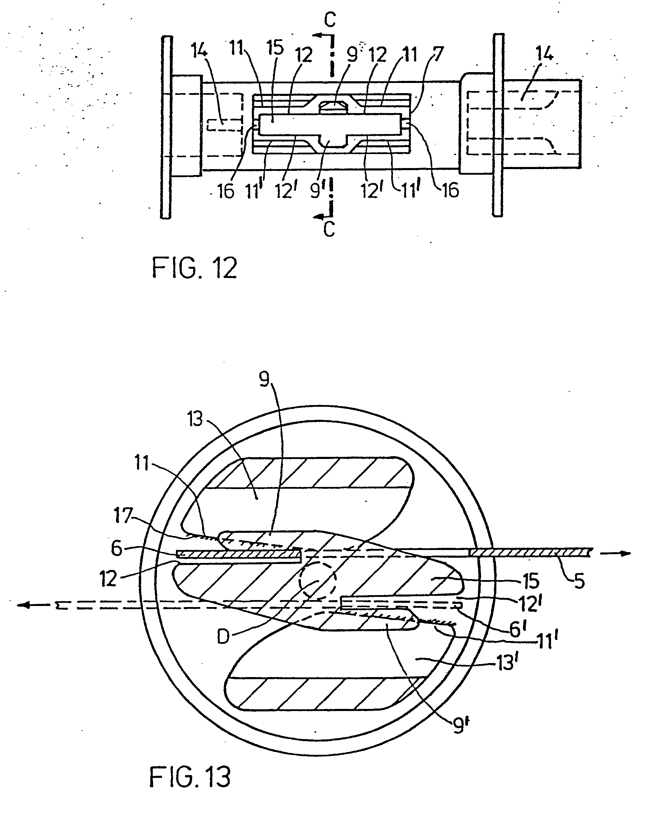

In Fig. 12 und 13 ist ein weiteres Ausführungsbeispiel gezeigt, welches dann von Vorteil ist, wenn ein Einfädeln des Filmendes 6 in den Spulenschlitz 7 von beiden Seiten gewünscht wird. Die Spule braucht zum Einfädeln des Filmendes 6 bzw. 6′ nicht um maximal knapp 360°, sondern nur bis maximal knapp 180° gedreht zu werden. Auch benötigt eine derartige Spule keine zusätzliche Markierung zum Einstellen der Einfädelseite zum Filmende 6 bzw. 6′, da die genormten Spulen bereits in den beidseitigen Spulenbohrungen Mitnehmer 14 für den Kameraschlüssel besitzen, die diese Funktion übernehmen können.

In den Spulenschlitz 7 ist ein um die Achse D schwenkbarer Klemmkörper 15 in der Spulenmitte an Torsionsstäben 16 gelagert. Oberhalb und unterhalb des Klemmkörpers 15 sind Haken 9, 9′ angeordnet, die in entgegengesetzte Richtungen zeigen. In den hakenfreien Zonen des Klemmkörpers 15 sind mit diesem bewegliche Klemmflächen 12, 12′ und diesen gegenüber an festen Klemmkörpern 13, 13′ jeweils feststehende Klemmflächen 11, 11′ angeordnet. In Fig. 13 ist ein Schnittbild durch die Haken 9, 9′ entlang der Linie CC (Fig. 12) dargestellt. Im oberen Haken 9′ ist ein Filmende 6 eingehakt. Statt dessen kann auch im unteren Haken 9 ein Filmende 6′ von der anderen Seite des Spulenschlitzes 7 eingehakt werden, was durch gestrichelte Zeichnung dargestellt ist. Wird der Film 5 mit Zug belastet (Pfeil), so wird der Klemmkörper 15 um die Drehachse D gedreht, wodurch sich die Klemmfläche 12 bzw. 12′ der feststehenden Klemmfläche 11 bzw. 11′ nähert und das Filmende 6 einklemmt.

Die Klemmkraft ist bei dieser Ausführungsform geringer als bei den vorhergehenden Beispielen, da das Drehmoment wegen des geringeren Abstandes der Haken vom Drehpunkt kleiner ist.

Eine gute Haltekraft wird jedoch dadurch erreicht, daß mindestens eine der Klemmflächen 11, 12 und 11′, 12′ aufgerauht hergestellt oder mit gegen die Zugrichtung gestellten Zähnen 17 versehen wird. Die Anbringung der Zähne ist spritztechnisch auch mit einer einfachen Form möglich, da sich keine Hinterschneidungen ergeben.

Die beispielsweise beschriebenen Befestigungseinrichtungen erhöhen in erheblichem Maße die Filmhaltekraft, da die durch den Filmzug aktivierte Einklemmung des Filmendes zu der durch das Einhaken erzielbaren Filmhaltekraft hinzukommt und ein Ausreißen des Langloches im Filmende 6, selbst bei der Verwendung von Kameras mit motorischem Filmtransport (Winderkameras), nicht auftritt. Die von der Norm vorgeschriebenen Werte für die statische und dynamische Haltekraft der Verbindung Spule-Filmende können mit den beschriebenen Befestigungseinrichtungen mit großer Sicherheit eingehalten werden.

**Patentansprüche**

1. Haken-Klemmspule zur Befestigung eines gelochten Filmstreifenendes im Schlitz eines Spulenkernes einer Filmspule, dadurch gekennzeichnet, daß in dem Schlitz (7) der Filmspule (1) mindestens ein Haken (9, 9') auf einem um eine Drehachse (D) schwenkbaren Klemmkörper (8, 8'; 15) vor einer Klemmfläche (12, 12') des Klemmkörpers angeordnet ist und der Klemmfläche (12, 12') gegenüber an einem weiteren Klemmkörper (13; 8'; 13') außerhalb des Hakenbereiches eine Klemmfläche (11, 11') vorgesehen ist, gegen die die Klemmfläche des schwenkbaren Klemmkörpers schwenkbar ist, wenn der Haken auf Zug belastet ist, wodurch das in den Haken eingehakte Filmende (6, 6') außerhalb des Hakenbereiches einklemmbar ist.

2. Haken-Klemmspule nach Anspruch 1, dadurch gekennzeichnet, daß zwei Haken (9, 9'') auf dem um eine Drehachse (D) schwenkbaren Klemmkörper (8) nebeneinander vor einer Klemmfläche (12) angeordnet sind, so daß drei Abschnitte entstehen, in denen der nicht gelochte Teil des Filmstreifenendes (6) zwischen der Klemmfläche (12) des schwenkbaren Klemmkörpers (8) und der gegenüber angeordneten feststehenden Klemmfläche (11) des weiteren Klemmkörpers (13) einklemmbar ist.

3. Haken-Klemmspule nach Anspruch 1, dadurch gekennzeichnet, daß in dem Schlitz (7) der Filmspule (1) zwei Haken (9, 9') nebeneinander vorgesehen sind, wobei der eine Haken (9) auf einem unteren schwenkbaren Klemmkörper (8) und der zweite Haken (9') auf einem oberen schwenkbaren Klemmkörper (8') angeordnet ist, die Haken (9, 9') vor Klemmflächen (12, 12') befestigt sind und die Klemmkörper (8, 8') so ausgebildet sind, daß sich in den hakenfreien Bereichen die Klemmflächen (12, 12') gegenüberstehen und gegeneinander schwenkbar sind, wenn die Haken (9, 9') auf Zug belastet werden, so daß das in die Haken (9, 9') eingehakte Filmende (6) außerhalb des Hakenbereiches einklemmbar ist.

4. Haken-Klemmspule nach Anspruch 1, dadurch gekennzeichnet, daß in dem Schlitz (7) der Filmspule (1) mindestens zwei Haken (9, 9') auf gegenüberliegenden Seiten eines in der Schlitzmitte schwenkbar angeordneten Klemmkörpers (15) vorgesehen sind, die Einhakrichtungen der Haken (9, 9') um 180° versetzt sind und oberhalb und unterhalb des schwenkbaren Klemmkörpers (15) an spulenfesten weiteren Klemmkörpern (13, 13,) in an die Hakenbereiche angrenzenden Bereichen Klemmflächen (11, 11,) angeordnet sind, gegen die der Klemmkörper (15) mit seinen Klemmflächen (12 bzw. 12') schwenkbar ist, so daß der nicht gelochte Teil des Filmstreifenendes (4) zwischen den Klemmflächen (12 bzw. 12') des schwenkbaren Klemmkörpers (15) und den feststehenden Klemmflächen (11, 11,) einklemmbar ist.

5. Haken-Klemmspule nach Anspruch 4, dadurch gekennzeichnet, daß auf jeder Seite des Klemmkörpers (8, 15) Hakenpaare vorgesehen sind.

6. Haken-Klemmspule nach einem der Ansprüche 1 bis 5, dadurch gekennzeichnet, daß mindestens eine der gegenüberliegenden Klemmflächen (11, 12, 11', 12') zur Vergrößerung der Haltekraft bei der Klemmung aufgerauht oder mit gegen die Zugrichtung gerichteten Zähnen (17) versehen ist.

7. Filmspule nach einem der vorangehenden Ansprüche, dadurch gekennzeichnet, daß sie an einem außerhalb einer sie umgebenden Kassette liegenden Teil (4) mit mindestens einem Kennzeichen (14) versehen ist, das die Stellung des Einfädelschlitzes (7) anzeigt.

**Revendications**

1. Bobine de coincement par accrochage pour fixer l'extrémité d'une bande de film perforée dans la fente du moyeu d'une bobine de film, caractérisée par le fait qu'au moins un crochet (9, 9') se trouve dans la fente (7) de la bobine de film (1), sur un corps de blocage (8, 8'; 15) pouvant pivoter autour d'un axe de rotation (D), et devant une surface de pincement (12, 12') de ce corps de blocage, un autre corps de blocage (13; 8'; 13') comportant extérieurement à la zone d'accrochage, en regard de ladite surface de pincement (12, 12'), une surface de pincement (11, 11') vers laquelle la surface de pincement du corps de blocage pivotant peut pivoter lorsque le crochet est sollicité en traction, de sorte que l'extrémité du film (6, 6') emprisonnée dans le crochet peut être enserrée à l'extérieur de la zone d'accrochage.

2. Bobine de coincement par accrochage selon la revendication 1, caractérisée par le fait que deux crochets (9, 9'') sont agencés en juxtaposition devant une surface de pincement (12) sur le corps de blocage (8) pouvant pivoter autour d'un axe de rotation (D), de manière à délimiter trois tronçons dans lesquels la partie non perforée de l'extrémité (6) de la bande de film peut être enserrée entre la surface de pincement (12) du corps de blocage pivotant (8) et la surface fixe de pincement (11) de l'autre corps de blocage (13), située en vis-à-vis.

3. Bobine de coincement par accrochage selon la revendication 1, caractérisée par le fait que deux crochets (9, 9') sont prévus en juxtaposition dans la fente (7) de la bobine de film (1), l'un (9) de ces crochets et le second crochet (9') étant respectivement disposés sur un corps inférieur de blocage pivotant (8) et sur un corps supérieur de blocage pivotant (8'), lesdits crochets (9, 9') étant fixés devant des surfaces de pincement (12, 12') et les corps de blocage (8, 8') étant réalisés de telle sorte que, dans les zones dépourvues de crochets, les surfaces de pincement (12, 12') se trouvent en face l'une de l'autre et puissent pivoter l'une vers l'autre lorsque les crochets (9, 9') sont sollicités en traction, de sorte que l'extrémité du film (6) emprisonnée dans lesdits crochets (9, 9') peut être enserrée à l'extérieur de la zone d'accrochage.

4. Bobine de coincement par accrochage selon la revendication 1, caractérisée par le fait qu'au moins deux crochets (9, 9') sont prévus dans la fente (7) de la bobine de film (1) sur des côtés opposés d'un corps de blocage (15) installé à pivotement au centre de la fente, les sens d'accrochage desdits crochets (9, 9') étant décalés de 180° et d'autres corps de blocage (13, 13') assujettis à la bobine comportant, au-dessus et au-dessous du corps de blocage pivotant (15) et dans les zones contiguës aux zones d'accrochage, des surfaces de pincement (11, 11') vers lesquelles le corps de blocage (15) peut pivoter par ses surfaces de pincement (12, 12', respectivement), de sorte que la partie non perforée de l'extrémité (4) de la bande de film peut être enserrée entre les surfaces de pincement (12, 12', respectivement) du corps de blocage pivotant (15) et les surfaces de pincement fixes (11, 11,).

5. Bobine de coincement par accrochage selon la revendication 4, caractérisée par le fait que des paires de crochets sont prévues de chaque côté du corps de blocage (8, 15).

6. Bobine de coincement par accrochage selon l'une des revendications 1 à 5, caractérisée par le fait qu'au moins l'une des surfaces de pincement opposées (11, 12, 11', 12') est rendue rugueuse en vue d'accroître la force de retenue lors du coincement, ou bien est pourvue de dents (17) dirigées à l'opposé du sens de traction.

7. Bobine de film selon l'une des revendications précédentes, caractérisée par le fait qu'elle est munie, sur une partie (4) située à l'extérieur d'une cassette qui l'entoure, d'au moins un repère (14) indiquant la position de la fente d'insertion (7).


**Claims**

1. Hooked clamping spool for fastening a perforated film strip end in the slot of a spool core of a film spool, characterised in that in the slot (7) of the film spool (1) at least one hook (9, 9') is arranged on a clamping body (8, 8'; 15) in front of a clamping surface (12, 12') of the clamping body, which can be pivoted about an axis of rotation (D), and a clamping surface. (11, 11,) is provided opposite the clamping surface (12, 12') on another clamping body (13; 8'; 13'), outside the hook region, against which clamping surface (11, 11') the clamping surface of the pivotable clamping body can be pivoted when the hook is under tension, as a result of which the film end (6, 6') hooked on to the hook can be clamped outside the hook region.

2. Hooked clamping spool according to Claim 1, characterised in that two hooks (9, 9'',) are arranged next to each other in front of a clamping surface (12) on the clamping body (8) which is pivotable about an axis of rotation (D), so that three sections are formed in which the unperforated portion of the film strip end (6) can be clamped between the clamping surface (12) of the pivotable clamping body (8) and the opposite stationary clamping surface (11) of the other clamping body (13).

3. Hooked clamping spool according to Claim 1, characterised in that in the slot (7) of the film spool (11) two hooks (9, 9') are provided next to each other, the one hook (9) being arranged on a lower pivotable clamping body (8) and the second hook (9') being arranged on an upper pivotable clamping body (8'), the hooks (9, 9') being fastened in front of the clamping surfaces (12, 12') and the clamping bodies (8, 8') being shaped in such a manner that the clamping surfaces (12, 12') are opposite each other and can be pivoted towards each other in the hook-free regions when the hooks (9, 9') are under tension, so that the film end (6) hooked on to the hooks (9, 9') can be clamped outside the hook region.

4. Hooked clamping spool according to Claim 1, characterised in that in the slot (7) of the film spool (1) at least two hooks (9, 9') are provided on opposite sides of a clamping body (15) arranged in a pivotable manner in the middle of the slot, the hooking directions of the hooks (9, 9') are displaced by 180°, and above and below the clamping body (15) clamping surfaces (11, 11') are arranged, in regions adjacent to the hook regions, on other clamping bodies (13, 13') fixed in the spool, against which clamping bodies (13, 13') fixed in the spool, against which clamping surfaces (11, 11') the clamping body (15) can be pivoted with its clamping surfaces (12 and 12' respectively), so that the unperforated portion of the film strip end (4) can be clamped between the clamping surfaces (12 and 12') of the pivotable clamping body (15) and the stationary clamping surfaces (11, 11').

5. Hooked clamping spool according to Claim 4, characterised in that pairs of hooks are provided on each side of the clamping body (8, 15).

6. Hooked clamping spool according to one of Claims 1 to 5, characterised in that, in order to increase the holding force during clamping, at least one of the mutually opposing clamping surfaces (11, 12, 11', 12') is roughened or provided with teeth (17) directed in the opposite direction to the pulling direction.

7. Film spool according to one of the preceding claims, characterised in that it is provided, on a part (4) situated outside a cassette surrounding it, with at least one mark (14) which indicates the position of the threading-in slot (7).

FIG. 1

FIG. 2

FIG. 3

FIG. 4

FIG. 5

FIG. 6

FIG. 7

FIG. 8

FIG. 9

FIG.10

FIG. 11

FIG. 12

FIG. 13